# EUROPEAN PATENT SPECIFICATION

(11) **EP 1 388 313 B1**
(45) Date of publication and mention of the grant of the patent: **09.07.2008**
(21) Application number: 03254865.3
(22) Date of filing: 05.08.2003
(51) Int. Cl.: A47J 31/30

(54) **Electric beverage maker**
Elektrischer Getränkebereiter
Récipient électrique à confectionner des breuvages

(30) Priority: 06.08.2002 GB 0218223
(43) Date of publication of application: 11.02.2004
(73) Proprietor: STRIX LIMITED, Ronaldsway, Isle of Man IM9 2RG (GB)
(72) Inventor: Scott, Michael James, Port St. Mary Isle of Man IM9 5PH (GB)
(74) Representative: Leckey, David Herbert

(56) References cited:
- WO-A-95/34187
- WO-A-99/48331
- DE-A- 19 914 651
- DE-U- 20 119 168
- US-A- 3 757 670

## Description

The present invention relates to electric beverage makers, and in particular but not exclusively to electric coffee makers. US 3757670 provides an example of an electric coffee maker.

The invention provides an electric beverage maker as defined in claim 1. US 3757670 discloses the features in the preamble portion of claim 1.

The base may be an integral part of the lower vessel. For example it may be integrally cast with the lower vessel body. Alternatively, it may be a separate component which is mounted to the lower vessel body, for example by brazing or welding or to close an opening in the heating vessel wall.

The heating means may take different forms. It may comprise a heater, preferably a planar heater which may be mounted to, or form at least a part of, the base of the lower vessel. For example, the heater may comprise a thick film heater or a sheathed electric heating element suitably secured to a support plate, for example a heat diffusion member, or it may be a cast element, that is a heater having a sheathed heating element cast into a supporting matrix, normally by die casting. In another embodiment, the heater may comprise a sheathed electric heating element mounted directly to the base of the lower vessel.

Preferably the region of the base arranged below the funnel outlet is unheated so as to prevent boiling and generation of steam in this region which could be deleterious to the flavour of the beverage produced. Also, entrapped steam can produce disturbing noises and vibration, if allowed to rise with the heated water, as these appliances typically operate a pressures as high as 3 bar. Furthermore, the escaping high pressure steam can expand rapidly and produce undesirable splashing in the upper vessel.

In accordance with the present invention the heating means is arranged so as to prevent boiling of water in the region below the lower end of the funnel.

Preferably therefore the heating element extends around a peripheral region of the base, for example in a horseshoe configuration around the base. Preferably, however, the heater extends for greater than 360° around the base, typically in the form of a spiral. This provides heating around the entire periphery of the base. Furthermore, it allows a greater length of element to be accommodated on the base which is advantageous where a relatively low powered heater is required.

In order to prevent heat transfer into the central region of the base, a number of steps can be taken. In one arrangement, the base may be made from a material having a low thermal conductivity such as stainless steel, and a sheathed heater arranged displaced from the region under the funnel outlet. According to the present invention, the heater is provided on or in a thermally conductive diffusion member attached to the base and the diffusion member is substantially thinned or removed altogether in the region under the funnel outlet to prevent heat being conducted into the region.

The use of a material having a low thermal conductivity for the base is that it reduces the flow of heat outwardly to provide a cool outer flange which can be mounted to a plastics body, for example in the manner disclosed in Applicant's WO 96/18331.

The thermally sensitive control preferably comprises a thermally sensitive actuator such as a bimetallic actuator arranged in good thermal contact with the lower vessel base or the heater.

Where the heater is mounted on or in a thermally conductive heat diffusion member, the actuator can be mounted in good thermal contact with that diffusion member so that it receives heat from the heater through the diffusion member.

The actuator may be part of an integrated control unit such as one described in WO99/48331, or it may be part of a simple thermostatic switch, for example a "buttonstat". Such switches typically comprise a bimetallic disc which changes curvature about a predetermined temperature to open a set of contacts within the switch.

The thermally sensitive control may cycle so as to reconnect power to the heater after the heater has cooled, but preferably it does not cycle, but rather disconnects the power until the control is reset by a user. Preferably, therefore, the control comprises a thermally sensitive actuator which acts to open a set of contacts when the liquid in the lower vessel has been boiled away, and further comprises means for maintaining those contacts open until such time as reset by a user of the appliance.

The actuator may be of the type which has a reset temperature which is significantly below normal ambient temperatures so that during normal use it will not reset automatically. A suitable mechanism may be provided to reset the mechanism manually when needed.

In another embodiment, the movable contact may be mounted on a bi-stable contact arm which, once it has been moved to its open position can only be returned to its closed position by a manual reset mechanism.

In a further embodiment, the movable contact may be latched open after operation of the actuator, and a manual latch release mechanism be provided.

The overheat protector may also take any suitable form. For example it too may take the form of a thermally sensitive actuator such as a bimetallic actuator arranged in good thermal contact with the vessel base or heater. It could, therefore, comprise a simple thermostat, such as a "buttonstat" placed in contact with the vessel base or heater.

The overheat protector could cycle but preferably it is either configured such that it can only be reset manually after operation or such that it is a "one shot" device which permanently disables the heater after operation. Thus the overheat protector may comprise a thermal fuse arranged in good thermal contact with the vessel base or heater which melts or softens in the event of overheating to permanently open a set of contacts to disable the heater.

A lamp or other indicator may be provided which is illuminated either while the liquid is heating, or more preferably after the control has operated, thereby indicating that the beverage is ready.

The heating base of the lower vessel is preferably arranged to slope and the actuator of the control arranged at an upper part of the base.

The beverage maker is preferably a cordless appliance, such that it rests upon a power supply stand, with an electrical connector provided between the power stand and the lower vessel.

Most preferably the connector is of the type which allows the lower vessel to be placed down on the stand irrespective of its angular orientation relative to the stand.

A preferred embodiment of the invention will now be described with reference to the accompanying drawings in which:

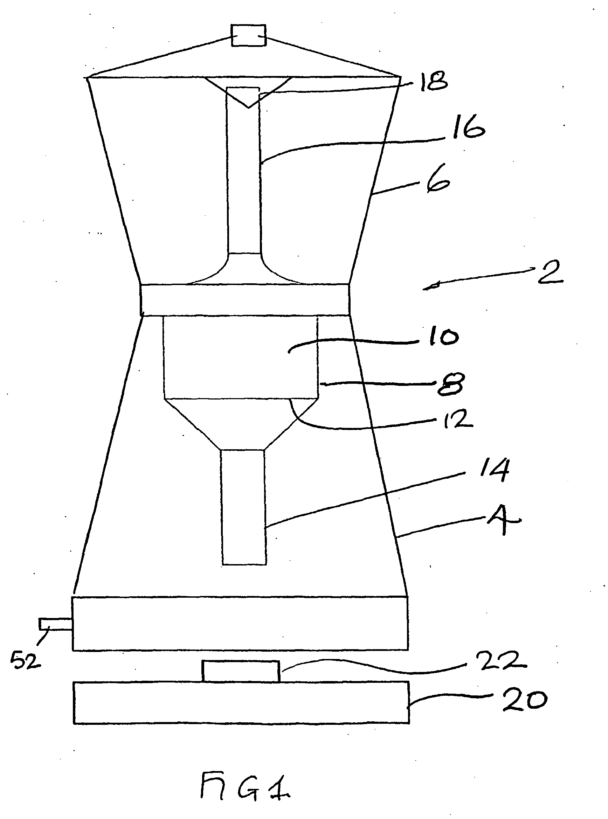

Figure 1 shows a coffee making appliance for reference purposes only;

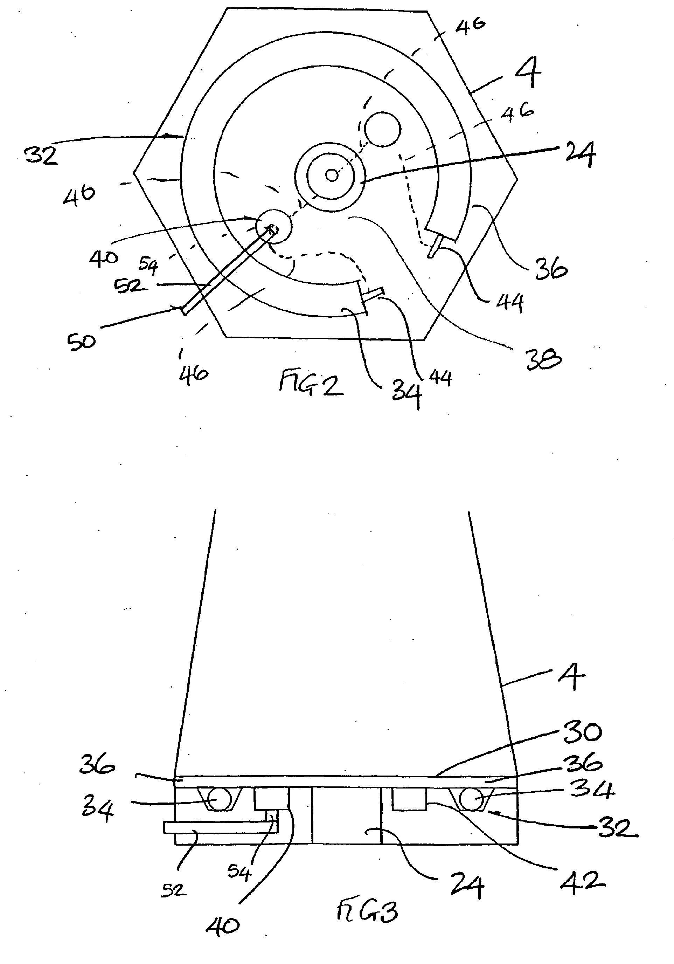

Figure 2 shows a schematic bottom plan view of the appliance of Figure 1;
Figure 3 shows a schematic sectional view of certain parts of the appliance of Figure 1; and
Figure 4 shows a further heater in accordance with the invention.

With reference to the Figures, a coffee making appliance 2 comprises three main components: a lower, water boiling, vessel 4, an upper beverage receiving vessel 6 and an intermediate funnel 8. The funnel 8 has a chamber 10 with a perforated base 12 for receiving coffee grounds, and a tube 14 extending down into the lower vessel 4.

In the appliance shown, the upper vessel 6 is made from a moulded plastics material or a metallic material such as aluminium or stainless steel, and the lower vessel 4 made of a metallic material such as aluminium or stainless steel.

The upper vessel 6 and lower vessel are screw threaded together, trapping the funnel between them. Suitable sealing means are provided between the upper and lower vessels 4, 6 to prevent the escape of water or steam from between them.

The upper vessel 6 is also provided with an upwardly extending spout 16 with apertures 18 at its upper end through which boiled water enters the upper vessel 6.

As described so far, the appliance is standard and constructions of this general type will be familiar to the skilled person.

The appliance 2 is a cordless appliance meaning that the appliance proper sits on a power stand 20 having an electrical connector provided 22 on its upper surface which provides power to the heater through a complementary connector 24 provided on the lower vessel 4 as will be described further below.

The lower vessel 4 has an integrally formed base 30 which is provided with an electric heater 32. In this appliance, shown for reference purposes only, the heater 32 is a die cast heating element comprising a sheathed electric heating element 34 cast into an aluminium carrier plate 36 which is brazed, or otherwise suitably attached, to the underside of the base 30. If the lower vessel 4 is of aluminium, the heating element 34 may be integrally cast into the vessel base 30.

The sheathed heating element 34 extends approximately 300° about the vessel base 30 leaving a central region 38 below the bottom of the tube 14 of funnel 8 which is indirectly heated through diffusion of heat through the carrier plate 36.

The base 30 of the lower vessel 4 is also provided with a 360° electrical connector 24, for example one of the Applicant's P72 connectors. This connector makes electrical connection with the complementary connector 22 in the power supply base 20, as described above.

The base 30 is also provided with two thermally sensitive switches 40, 42 mounted in good thermal contact with the base 30. The respective poles of the electrical connector 24 are connected to respective terminals 44 of the heating element 34 through the switches 40, 42 as schematically illustrated by dotted wires 46.

Both switches 40, 42 are so called "buttonstats" which comprise a domed, disc shaped bimetallic actuator which changes curvature when it reaches a predetermined temperature and in so doing opens a set of contacts within the switch. Such switches are well known in the art and are widely available commercially.

As will be described further below, the first switch 40 is intended to switch the appliance off when the water in the lower vessel 4 has substantially boiled away, and the second switch 42 is intended to operate as an overheat protector which operates in the event of the base 30 severely overheating, for example in the event of a failure of the switch 40.

Accordingly, the switches 40, 42 are arranged to operate at different temperatures. Either the second switch 42 may have a higher operating temperature than the other (using different bimetallic actuators) or it may be placed at a greater spacing from the heating element 34. For convenience, in this embodiment the switches are shown at the same spacing from the element 34, meaning that the second switch 42 has a higher nominal operating temperature than the first switch 40.

The first switch 40 is of the type that once it operates it can only be reset by manual intervention. This is to prevent the heater operating when the water in the lower vessel 4 has evaporated away. Again these switches are well known in the art and typically comprise a bimetallic actuator which will only revert to its original position (and thus allow re-energisation of the appliance heater) after operation either when the temperature falls significantly below ambient temperature or when it is physically reset by a user.

To this end, a reset mechanism 50 is provided. Most simply this may comprise a reset button 52 extending out from the appliance base which acts on a push rod 54 extending from the switch which physically moves the actuator back to its original configuration. To this end, the end of the button 52 may have a cam profile such that when it is pushed in the switch push rod moves upwardly in the sense of the drawings to reset the actuator. The button 52 is preferably spring loaded such that once released it returns to its rest position.

The overheat protection switch 48 may also be of a similar construction or may be such that it cycles.

In operation, a desired volume of water is placed in the lower vessel 4. This volume can be pre-measured or gauged from volumetric marks (not shown) provided on the inside of the vessel wall.

The funnel compartment 10 is then filled with coffee grounds (or other foodstuffs), and a strainer filter plate (not shown) then used to tamp down the coffee and then rested on the top of the grounds.

The funnel 8 is then placed in position on the lower vessel 4 and the upper vessel 6 then screwed onto the upper end 16 of the lower vessel 4 so as to seal the lower vessel 4. The whole appliance is then placed on its power base (not shown) and the reset button 52 pressed to supply power to the heater 36.

The water in the lower vessel 4 is then heated to a point where steam vapour is generated which creates a pressure in the lower vessel 4. This forces the water from the lower vessel 4 up through the funnel 8, through the coffee grounds, where it infuses with the coffee, up the spout 18 and out of the apertures 20 formed in the spout 18 of the upper vessel 6.

Once the majority of the water has been pushed out of the lower vessel 4 through the funnel 8, the temperature of the heater 32 and base 30 will begin to rise, and this rise will be detected by the actuator of the first switch 40. In particular, the actuator of the switch will operate to open the switch and thereby disconnect the power supply to the heater 32 when the area of the base 30 under which it is arranged boils dry. The switch contacts are maintained open in order to stop the heater re-energising.

The appliance can then be lifted and the beverage dispensed from the upper vessel 6, whereafter the upper vessel 6 may be unscrewed from the lower vessel 4, the funnel 8 removed and the appliance cleaned. The process will then be repeated to prepare a new beverage, the act of pressing the reset button 52 thereby resetting the actuator and allowing the contacts to reclose in order to supply power once more to the heater 36.

In the event that the first switch 40 should fail to operate, the temperature of the base 30 will continue to rise to the point where the second switch 42 to disconnect the power to the heater 32.

It will be appreciated that various modifications can be made to the above described appliance.

For example, a thermal fuse may replace the switch 48 such that when the base 30 overheats the fuse melts permanently disconnecting the power supply to the heater.

In accordance with the present invention the heater is not a die cast heater as described. It could, for example, comprise a sheathed element brazed onto a heat diffusion plate attached to the base 30. It could also comprise a thick film heater attached to, or forming a part of, at least a part of the base 30.

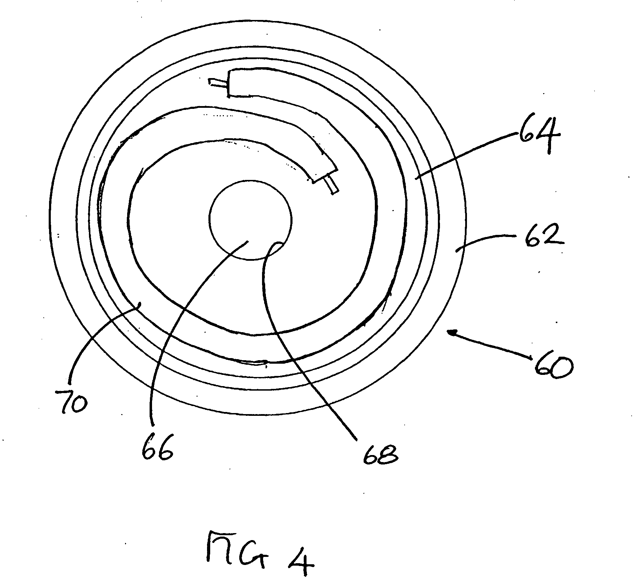

As discussed in the introduction above, it is advantageous to reduce the heat flowing into the region 38 below the funnel to prevent water boiling below the funnel. Figure 4 shows such a heater arrangement in accordance with a preferred embodiment of the present invention.

In this embodiment, the base 60 of the lower vessel 4 is formed as a plate of a low thermal conductivity material such a stainless steel. The base is provided with a peripheral region 62 which can be used to mount the base to the lower end of the wall of the vessel 4, which may be of plastics. The base 60 may be dished, as shown for example in WO 96/18331 and the peripheral region 62 may comprise a flange for clamping against or a channel for gripping the vessel wall, the latter arrangement again being as described in WO 96/18331.

A thermally conductive diffusion plate 64 of aluminium or aluminium alloy is mounted e.g. brazed on the underside of the base 60. The central region 66 of the plate 64 (i.e. that region under the region 38 of the base at the bottom of the funnel) is thinned or removed altogether to leaving an aperture 68, as shown.

The diffusion plate 64 mounts a sheathed electric heating element 70 whose heated length extends in excess of 360° around the plate 64. This heats a greater region of the base 60 and also accommodates a greater length of element which may desirable when relatively low powers, for example 600W or less are needed.

In this embodiment, heat from the element 70 is not transmitted to the region 38 of the base 60 preventing boiling in this region. Due to the low thermal conductivity of the base 64, the peripheral region 62 remains relatively cool allowing the base to be mounted to a plastics vessel wall.

In addition to the above, the appliance need not be a cordless one, and controls other than those specifically described may be used, so long as they detect overheating of the heated base vessel. Furthermore, other latching mechanisms may be envisaged for holding open the contacts of a control upon operation.

## Claims

1. An electric beverage maker comprising a lower, water boiling vessel (4), a funnel (8) extending into the lower vessel (4), a compartment (10) for receiving a beverage, and an upper vessel (6) mounted over said funnel (8) to receive liquid which has passed up said funnel (8) through said compartment (10) and from which the beverage is dispensed, wherein the base (30;60) of the lower vessel (4) is provided with electric heating means (32) and with a thermally sensitive control for switching off, or reducing the power of, the heating means (32) when the lower vessel (4) boils substantially dry and **characterised in that** the base (30) is also provided with an overheat protector for switching off, or reducing the power of, the heating means (32) in the event of severe overheating of the base (30), and **in that** said heating means (70) is provided in or on a thermally conductive member (64) attached to the base (60) and wherein the thermally conductive member (64) is substantially thinned or removed altogether in the region (38;66) under the funnel outlet to prevent heat being conducted into the region (38;66).

2. A beverage maker as claimed in claim 1 wherein the base (30;60) of the lower vessel (4) is an integral part of the lower vessel (4).

3. A beverage maker as claimed in claim 2 wherein the base (30;60) is integrally cast with the lower vessel (4) body.

4. A beverage maker as claimed in claim 1 wherein the base (30;60) is a separate component which is mounted to the lower vessel (4) body to close an opening in the heating vessel wall.

5. A beverage maker as claimed in any preceding claim wherein the heating means comprises a heater mounted to, or forming at least a part of, the base (30;60) of the lower vessel (4).

6. A beverage maker as claimed in claim 5 wherein the heating means (32) is a planar heater.

7. A beverage maker as claimed in claim 6 wherein the heater (32) comprises a sheathed electric heating element (34;70) secured to a support plate.

8. A beverage maker as claimed in claim 7 wherein the support plate is a thermally conductive heat diffusion member (64).

9. A beverage maker as claimed in claim 7 wherein the heater (32) is a cast element comprising a sheathed heating element (34) cast into a thermally conductive supporting matrix (36).

10. A beverage maker as claimed in claim 9 wherein said cast element is integrally formed with the lower vessel (4) body.

11. A beverage maker as claimed in claim 6 wherein the heating means (32) is a thick film heater.

12. A beverage maker as claimed in claim 5 wherein the heating means is a sheathed electric heating element (34;70) mounted to the underside of the base (30;60) of the lower vessel (4).

13. A beverage maker as claimed in any preceding claim wherein the base (30;60) of the lower vessel (4) is of a material having a low thermal conductivity, such as stainless steel.

14. A beverage maker as claimed in any preceding claim wherein the heating element (34;70) extends around a peripheral portion of the base.

15. A beverage maker as claimed in any of claims 7-14 wherein said heating element (34;70) extends around at least 360° of the base (30;60).

16. A beverage maker as claimed in claim 13,14 or 15 wherein the base (60) is a plate member which has mounting means, such as a mounting flange or channel arranged around its periphery (62).

17. A beverage maker as claimed in any preceding claim wherein the thermally sensitive control comprises a thermally sensitive actuator (40) arranged in good thermal contact with the lower vessel base (30) or the heater (32).

18. A beverage maker as claimed in claim 17 wherein the control is a thermostatic switch (40) comprising a bimetallic disc which changes curvature at a predetermined temperature to open a set of contacts within the switch.

19. A beverage maker as claimed in any preceding claim wherein the thermally sensitive control disconnects the power to the heater (32) until the control is reset by a user.

20. A beverage maker as claimed in any of claims 1-16 wherein the thermally sensitive control comprises a thermally sensitive actuator (40) which acts to open a set of contacts when the liquid in the lower vessel has been boiled away, and further comprises means for maintaining those contacts open until such time as reset by a user of the appliance.

21. A beverage maker as claimed in claim 20 wherein the actuator (40) is of the type which has a reset temperature which is significantly below normal ambient temperatures so that during normal use it will not reset automatically.

22. A beverage maker as claimed in claim 20 wherein a movable contact may be mounted on a bi-stable contact arm which, once it has been moved to its open position can only be returned to its closed position by a manual reset mechanism.

23. A beverage maker as claimed in claim 22 wherein the movable, contact is latched open after operation of the actuator (40), and a manual latch release mechanism is provided.

24. A beverage maker as claimed in any preceding claim wherein the overheat protector comprises a thermally sensitive actuator (42) arranged in good thermal contact with the vessel base (30) or heater (32).

25. A beverage maker as claimed in claim 24 wherein the protector is a thermostatic switch (42) comprising a bimetallic disc which changes curvature at a predetermined temperature to open a set of contacts within the switch.

26. A beverage maker as claimed in any preceding claim wherein the overheat protector can only be reset manually after operation.

27. A beverage maker as claimed in any of claims 1 to 19 wherein the overheat protector is a "one shot" device which permanently disables the heater (32) after operation.

28. A beverage maker as claimed in claim 27 wherein the overheat protector comprise a thermal fuse arranged in good thermal contact with the vessel base (30) or heater (32) which melts or softens in the event of overheating to permanently open a set of contacts to disable the heater.

29. A beverage maker as claimed in any preceding claim further comprising a lamp or other indicator may be provided which is illuminated either while the liquid is heating, or after the control has operated, thereby indicating that the beverage is ready.

30. A beverage maker as claimed in any preceding claim wherein the heating base (30;60) of the lower vessel (4) is arranged to slope and the actuator of the control arranged at an upper part of the base (30;60).

31. A beverage maker as claimed in any preceding claim wherein the beverage maker is a cordless appliance, such that it rests upon a power supply stand, with an electrical connector (22,24) provided between the power stand (20) and the lower vessel (4).

32. A beverage maker as claimed in claim 31 wherein the connector (22,24) is of the type which allows the lower vessel (4) to be placed down on the stand (20) irrespective of its angular orientation relative to the stand (20).

## Patentansprüche

1. Elektrischer Getränkebereiter, umfassend
einen unteren Wasser-Siedebehälter (4), einen sich in den unteren Behälter (4) erstreckenden Trichter (8), ein Fach (10) für die Aufnahme eines Getränkes, und ein über dem Trichter (8) befestigter oberer Behälter (6) zur Aufnahme einer durch das Fach (10) in dem Trichter (8) nach oben durchgelaufene Flüssigkeit und von welchem das Getränk ausgegeben wird, wobei die Basis (30;60) des unteren Behälters (4) mit einem elektrischen Heizmittel (32) ausgestattet ist, sowie mit einer temperaturempfindlichen Steuerung/Regelung für das Abschalten oder das Reduzieren der Leistung des Heizmittels (32), falls der untere Behälter im wesentlichen Trocken kocht,
und **dadurch gekennzeichnet,**
**dass** die Basis (30) auch mit einem Überhitzungsschutz für das Abschalten oder das Reduzieren der Leistung des Heizmittels (32) im Falle von starker Überhitzung der Basis (30) ausgestattet ist,
und **dass** das Heizelement (70) in oder auf einem mit der Basis (60) verbundenen thermisch leitfähigen Element (64) ausgebildet ist, und wobei das thermisch leitfähige Element (64) in dem Bereich (38;66) unter dem Trichter-Auslass im Wesentlichen ausgedünnt oder vollständig entfernt ist, um zu vermeiden, dass Hitze in den Bereich (38;66) geleitet wird.

2. Getränkebereiter nach Anspruch 1,
wobei die Basis (30;60) des unteren Behälters (4) ein integraler Teil des unteren Behälters (4) ist.

3. Getränkebereiter nach Anspruch 2,
wobei die Basis (30;60) mit dem Gehäuse des unteren Behälters (4) integral gegossen ist.

4. Getränkebereiter nach Anspruch 1,
wobei die Basis (30;60) als ein separates Bauteil ausgestaltet ist und an das Gehäuse des unteren Behälters (4) befestigt wird, um eine Öffnung in der Heizgefäß-Wand zu schließen.

5. Getränkebereiter nach einem der vorhergehenden Ansprüche,
wobei das Heizmittel einen Erhitzer umfasst, der an der Basis (30;60) des unteren Behälters (4) befestigt ist oder zumindest ein Teil von ihr bildet.

6. Getränkebereiter nach Anspruch 5,
wobei das Heizmittel (32) ein ebener Erhitzer ist.

7. Getränkebereiter nach Anspruch 6,
wobei der Erhitzer (32) ein ummanteltes elektrisches Heizelement (34;70) umfasst, welches an eine Aufnahmeplatte befestigt ist.

8. Getränkebereiter nach Anspruch 7,
wobei die Aufnahmeplatte ein thermisch leitfähiges Wärmediffusionselement (64) ist.

9. Getränkebereiter nach Anspruch 7,
wobei der Erhitzer (32) ein gegossenes Element ist, umfassend ein ummanteltes Heizelement (34), welches in eine thermisch leitfähige tragende Matrix (36) gegossen ist.

10. Getränkebereiter nach Anspruch 9,
wobei das gegossene Element integral mit dem Gehäuse des unteren Behälters (4) ausgebildet ist.

11. Getränkebereiter nach Anspruch 6,
wobei das Heizmittel (32) ein Dickschicht-Erhitzer ist.

12. Getränkebereiter nach Anspruch 5,
wobei das Heizmittel ein ummanteltes elektrisches Heizelement (34;70) ist, welches an die Unterseite der Basis (30;60) des unteren Behälters (4) angebracht ist.

13. Getränkebereiter nach einem der vorhergehenden Ansprüche,
wobei die Basis (30;60) des unteren Behälters (4) aus einem Material mit niedriger thermischer Leitfähigkeit besteht, wie zum Beispiel Edelstahl.

14. Getränkebereiter nach einem der vorhergehenden Ansprüche,
wobei das Heizelement (34;70) sich rund um einen Randbereich der Basis erstreckt.

15. Getränkebereiter nach einem der Ansprüche 7 bis 14,
wobei das Heizelement (34;70) sich um mindestens 360° um die Basis (30;60) herum erstreckt.

16. Getränkebereiter nach Anspruch 13, 14 oder 15,
wobei die Basis (60) ein Plattenelement ist, welches Befestigungsmittel aufweist, wie zum Beispiel einen um dessen Umfang (62) herum angeordneten Befestigungsflansch oder -Kanal.

17. Getränkebereiter nach einem der vorhergehenden Ansprüche,
wobei die temperaturempfindliche Steuerung/Regelung einen temperaturempfindlichen Aktuator (40) umfasst, welcher so angeordnet ist, dass er in gutem thermischen Kontakt mit der Basis (30) des unteren Behälters oder mit dem Erhitzer (32) steht.

18. Getränkebereiter nach Anspruch 17,
wobei die Steuerung/Regelung ein Thermostat-Schalter (40) ist, umfassend eine Bimetall-Scheibe, welche bei einer vorgegebenen Temperatur ihre Krümmung ändert, um einen Satz von Kontakten innerhalb des Schalters zu öffnen.

19. Getränkebereiter nach einem der vorhergehenden Ansprüche,
wobei die temperaturempfindliche Steuerung/Regelung den Stromanschluss des Erhitzers (32) unterbricht, bis die Steuerung/Regelung durch einen Benutzer zurückgesetzt wird.

20. Getränkebereiter nach einem der Ansprüche 1 bis 16,
wobei die temperaturempfindliche Steuerung/Regelung einen temperaturempfindlichen Aktuator (40) umfasst, welcher die Öffnung eines Satzes von Kontakten auslöst, wenn die Flüssigkeit im unteren Behälter verdampft ist,
und diese ferner Mittel umfasst, um diese Kontakte offen zu halten, bis zu einem Zeitpunkt an dem ein Benutzer das Gerät zurücksetzt.

21. Getränkebereiter nach Anspruch 20,
wobei der Aktuator (40) von der Art ist, dass er eine Zurücksetz-Temperatur hat, welche signifikant unter normalen Umgebungstemperaturen liegt, so dass sich dieser bei Normalgebrauch nicht automatisch zurücksetzt.

22. Getränkebereiter nach Anspruch 20,
wobei ein beweglicher Kontakt auf einem bi-stabilen Kontakt-Arm befestigt sein kann, welcher, sobald dieser in seine offene Position gebracht wurde, nur durch einen manuellen Zurücksetz-Mechanismus in seine geschlossene Position zurückgeführt werden kann.

23. Getränkebereiter nach Anspruch 22,
wobei der bewegliche Kontakt nach Auslösen des Aktuators (40) aufschnappt, und ein manueller Schnapp-Entriegelungsmechanismus bereitgestellt ist.

24. Getränkebereiter nach einem der vorhergehenden Ansprüche,
wobei die Überhitzung-Schutzvorrichtung einen temperaturempfindlichen Aktuator (42) umfasst, welcher so angeordnet ist, dass er in gutem thermischen Kontakt mit der Basis (30) des unteren Behälters oder mit dem Erhitzer (32) steht.

25. Getränkebereiter nach Anspruch 24,
wobei die Schutzvorrichtung ein Thermostat-Schalter (42) ist, umfassend eine Bimetall-Scheibe, welche bei einer vorgegebenen Temperatur ihre Krümmung ändert, um einen Satz von Kontakten innerhalb des Schalters zu öffnen.

26. Getränkebereiter nach einem der vorhergehenden Ansprüche,
wobei die Überhitzung-Schutzvorrichtung nur manuell nach Betrieb zurückgesetzt werden kann.

27. Getränkebereiter nach einem der Ansprüche 1 bis 19,
wobei die Überhitzung-Schutzvorrichtung eine für einen einmaligen Anwendungsfall erstellte Vorrichtung ist, welche den Erhitzer (32) nach Betrieb permanent deaktiviert.

28. Getränkebereiter nach Anspruch 27,
wobei die Überhitzung-Schutzvorrichtung eine Temperatursicherung umfasst, angeordnet in gutem thermischen Kontakt mit der Basis (30) des Behälters oder mit dem Erhitzer (32), welche im Falle des Überhitzens schmilzt oder aufweicht, um einen Satz von Kontakten permanent zu öffnen, um den Erhitzer zu deaktivieren.

29. Getränkebereiter nach einem der vorhergehenden Ansprüche,
ferner umfassend eine zu Verfügung gestellte Lampe oder eine andere Anzeige, welche entweder beleuchtet wird, wenn die Flüssigkeit aufgeheizt wird, oder nachdem die Steuerung/Regelung tätig wurde, wodurch angezeigt wird, dass das Getränk zubereitet ist.

30. Getränkebereiter nach einem der vorhergehenden Ansprüche,
wobei die Heiz-Basis (30;60) des unteren Behälters (4) geneigt angeordnet ist, und der Aktuator der Steuerung/Regelung an einem höheren Teil der Basis (30;60) angeordnet ist.

31. Getränkebereiter nach einem der vorhergehenden Ansprüche,
wobei der Getränkebereiter ein kabelloses Gerät ist, derart dass dieser auf einem Stromversorgungsstandfuß ruht, ausgestattet mit einem elektrischen Anschluss (22;24) zwischen dem Stromversorgungsstandfuß (20) und dem unteren Behälter (4).

32. Getränkebereiter nach Anspruch 31,
wobei der Anschluss (22;24) derartig ist, dass der untere Behälter (4) unabhängig von seiner Winkelausrichtung bezüglich des Standfußes (20) auf dem Standfuß (20) platziert werden kann.

## Revendications

1. Dispositif électrique pour préparer des breuvages comprenant une cuve inférieure (4) pour porter de l'eau à ébullition, un entonnoir (8) se prolongeant dans la cuve inférieure (4), un compartiment (10) pour accueillir un breuvage, et une cuve supérieure (6) montée sur ledit entonnoir (8) pour accueillir un liquide qui est passé au-dessus dudit entonnoir (8) à travers ledit compartiment (10) et depuis laquelle le breuvage est distribué, dans lequel le socle (30 ; 60) de la cuve inférieure (4) est muni de moyens de chauffage électrique (32) et d'un moyen de contrôle thermiquement sensible pour couper, ou réduire, l'alimentation des moyens de chauffage (32) quand la cuve inférieure (4) chauffe substantiellement à sec, **caractérisé en ce que** le socle (30) est également muni d'une protection contre la surchauffe pour couper, ou réduire, l'alimentation des moyens de chauffage, dans le cas d'une surchauffe sévère du socle (30) et **en ce que** lesdits moyens de chauffage (70) sont prévus dans ou sur un élément thermiquement conducteur (64) fixé au socle (60) et dans lequel l'élément thermiquement conducteur (64) est substantiellement aminci ou complètement supprimé de la zone (38 ; 66) sous l'orifice de l'entonnoir pour empêcher la chaleur d'être conduite à la zone (38 ; 66).

2. Dispositif pour préparer des breuvages selon la revendication 1, dans lequel le socle (30 ; 60) de la cuve inférieure (4) fait partie intégrante de la cuve inférieure (4).

3. Dispositif pour préparer des breuvages selon la revendication 2, dans lequel le socle (30 ; 60) est moulé avec le corps de cuve inférieure (4).

4. Dispositif pour préparer les breuvages selon la revendication 1, dans lequel le socle (30, 60) est un composant distinct qui est monté sur le corps de cuve inférieure (4) pour fermer une ouverture dans la paroi du dispositif chauffant.

5. Dispositif pour préparer les breuvages selon l'une quelconque des revendications précédentes, dans lequel les moyens de chauffage comprennent une résistance montée sur le, ou formant au moins une partie du, socle (30, 60) de la cuve inférieure (4).

6. Dispositif pour préparer des breuvages selon la revendication 5, dans lequel les moyens de chauffage (32) sont une résistance plane.

7. Dispositif pour préparer des breuvages selon la revendication 6, dans lequel la résistance (32) comprend un élément chauffant électrique gainé (34 ; 70) fixé à une plaque de support.

8. Dispositif pour préparer des breuvages selon la revendication 7, dans lequel la plaque de support est un élément de diffusion de chaleur thermiquement conducteur (64).

9. Dispositif pour préparer des breuvages selon la revendication 7, dans lequel la résistance (32) est un élément moulé comprenant un élément chauffant gainé (34) moulé dans une matrice de support thermiquement conductrice (36).

10. Dispositif pour préparer des breuvages selon la revendication 9, dans lequel ledit élément moulé est formé d'une seule pièce avec le corps de la cuve inférieure (4).

11. Dispositif pour préparer des breuvages selon la revendication 6, dans lequel les moyens de chauffage (32) sont une résistance à couches minces.

12. Dispositif pour préparer des breuvages selon la revendication 5, dans lequel les moyens de chauffage sont un élément chauffant électrique gainé (34 ; 70) monté sur une face inférieure du socle (30 ; 60) de la cuve inférieure (4).

13. Dispositif pour préparer des breuvages selon l'une quelconque des revendications précédentes, dans lequel le socle (30 ; 60) de la cuve inférieure (4) est en un matériau ayant une faible conductivité thermique, tel qu'un acier inoxydable.

14. Dispositif pour préparer des breuvages selon l'une quelconque des revendications précédentes, dans lequel l'élément chauffant (34 ; 70) s'étend autour d'une partie périphérique du socle.

15. Dispositif pour préparer des breuvages selon l'une quelconque des revendications 7 à 14, dans lequel ledit élément chauffant (34 ; 70) s'étend sur environ au moins 360° du socle (30 ; 60).

16. Dispositif pour préparer des breuvages selon la revendication 13, 14 ou 15, dans lequel le socle (60) est un élément formant plaque qui est équipé de moyens de montage, tel qu'un rebord ou un canal de montage agencé autour de sa périphérie (62).

17. Dispositif pour préparer des breuvages selon l'une quelconque des revendications précédentes, dans lequel le moyen de contrôle thermiquement sensible comprend un actionneur thermiquement sensible (40) placé en bon contact thermique avec le socle de la cuve inférieure (30) ou de la résistance (32).

18. Dispositif pour préparer des breuvages selon la revendication 17, dans lequel le moyen de contrôle est un commutateur thermostatique (40) comprenant un disque bimétallique qui change de courbure à une température prédéterminée pour ouvrir un ensemble de contacts à l'intérieur du commutateur.

19. Dispositif pour préparer des breuvages selon l'une quelconque des revendications précédentes, dans lequel le moyen de contrôle thermiquement sensible déconnecte l'alimentation de la résistance (32) jusqu'à ce que la commande soit remise à l'état initiale par un utilisateur.

20. Dispositif pour préparer des breuvages selon l'une quelconque des revendications 1 à 16, dans lequel le moyen de contrôle thermiquement sensible comprend un actionneur thermiquement sensible (40) qui agit pour ouvrir un ensemble de contacts quand le liquide dans la cuve inférieure s'est évaporé, et comprend en outre des moyens pour maintenir ces contacts ouverts jusqu'à la remise à l'état initial par un utilisateur de l'appareil.

21. Dispositif pour préparer des breuvages selon la revendication 20, dans lequel l'actionneur (40) est du type qui a une température de remise à l'état initial qui est significativement au-dessous des températures ambiantes normales de telle sorte qu'en utilisation normale il ne sera pas remis automatiquement à l'état initial.

22. Dispositif pour préparer des breuvages selon la revendication 20, dans lequel un contact mobile peut être monté sur un bras de contact bistable qui, une fois qu'il a été déplacé dans sa position ouverte, peut seulement être remis à sa position fermée par un mécanisme de remise à l'état initial manuel.

23. Dispositif pour préparer des breuvages selon la revendication 22, dans lequel le contact mobile est basculé en position ouverte après fonctionnement de l'actionneur (40), et un mécanisme de relâche à loquet manuel est prévu.

24. Dispositif pour préparer des breuvages selon l'une quelconque des revendications précédentes, dans lequel l'une protection contre la surchauffe comprend un actionneur thermiquement sensible (42) placé en bon contact thermique avec le socle de récipient (30) ou la résistance (32).

25. Dispositif pour préparer des breuvages selon la revendication 24, dans lequel la protection est un commutateur thermostatique (42) comprenant un disque bimétallique qui change de courbure à une température prédéterminée pour ouvrir un ensemble de contacts à l'intérieur du commutateur.

26. Dispositif pour préparer des breuvages selon l'une quelconque des revendications précédentes, dans lequel la protection contre la surchauffe peut uniquement être remise à l'état initial manuellement après fonctionnement.

27. Dispositif pour préparer des breuvages selon l'une quelconque des revendications 1 à 19, dans lequel la protection contre la surchauffe est un dispositif 'à enclenchement unique' qui désactive de manière permanente la résistance (32) après fonctionnement.

28. Dispositif pour préparer des breuvages selon la revendication 27, dans lequel la protection contre la surchauffe comprend un fusible thermique placé en bon contact thermique avec le socle de cuve (30) ou la résistance (32) et qui fond ou se ramollit dans le cas d'une surchauffe pour ouvrir de façon permanente un ensemble de contacts afin de désactiver la résistance.

29. Dispositif pour préparer des breuvages selon l'une quelconque des revendications précédentes, comprenant en outre un voyant lumineux, ou tout autre indicateur qui peut être prévu, qui est éclairé soit pendant que le liquide chauffe, soit après que la commande a fonctionné pour indiquer que le breuvage est prêt.

30. Dispositif pour préparer des breuvages selon l'une quelconque des revendications précédentes, dans lequel le socle chauffant (30 ; 60) de la cuve inférieure (4) est placé pour être incliné et l'actionneur de la commande est agencé au niveau d'une partie supérieur du socle (30 ; 60).

31. Dispositif pour préparer des breuvages selon l'une quelconque des revendications précédentes, dans lequel le dispositif pour préparer des breuvages est un appareil sans fils, de telle sorte qu'il repose sur une embase d'alimentation, avec un connecteur électrique (22, 24) prévu entre le socle d'alimentation (20) et la cuve inférieure (4).

32. Dispositif pour préparer des breuvages selon la revendication 31, dans lequel le connecteur (22, 24) est du type qui permet à la cuve inférieure (4) d'être posée sur une embase (20) sans de préoccuper de son orientation angulaire par rapport à l'embase (20).
